# EUROPEAN PATENT SPECIFICATION

(11) **EP 3 669 074 B1**
(45) Date of publication and mention of the grant of the patent: **21.02.2024**
(21) Application number: 18765977.6
(22) Date of filing: 14.08.2018
(51) Int. Cl.: F03G 7/06, G02B 7/08, G02B 27/64, G03B 3/10, G03B 5/02

(54) **SMA ACTUATOR WIRE OPTICAL ASSEMBLY**
OPTISCHE ANORDNUNG MIT SMA-BETÄTIGUNGSDRAHT
ENSEMBLE OPTIQUE À FIL D'ACTIONNEUR SMA

(30) Priority: 17.08.2017 GB 201713191
(43) Date of publication of application: 24.06.2020
(73) Proprietor: Cambridge Mechatronics Limited, Cambridge, Cambridgeshire CB4 1YG (GB)
(72) Inventor: BROWN, Andrew Benjamin Simpson, Cambridge Cambridgeshire CB4 1YG (GB); BUNTING, Stephen, Cambridge Cambridgeshire CB4 1YG (GB); HOWARTH, James, Cambridge Cambridgeshire CB4 1YG (GB); LANGHORNE, Robert, Cambridge Cambridgeshire CB4 1YG (GB)
(74) Representative: Cambridge Mechatronics Limited
(86) International application number: PCT/GB2018/052302
(87) International publication number: WO 2019/034860

(56) References cited:
- WO-A1-2011/104518
- WO-A1-2017/134456
- DE-A1-102015 103 105
- DE-A1-102015 105 542
- US-A1- 2002 113 499
- US-B1- 6 516 146

## Description

The present application generally relates to an optical assembly driven by one or more shape memory alloy SMA actuator wires, and in particular to an optical assembly comprising angled end-stops.

The present techniques relate to an optical assembly wherein an SMA actuator wire is inclined with respect to the optical axis of the optical element whose movement is driven, or with respect to a notional primary axis of the actuator assembly along which the moveable portion is able to move. An example of such a known optical assembly is disclosed in WO 2011/104518 A1.

The objective of the present invention is to increase the actuator's reliability.

This objective is achieved by an actuator assembly with end-stop surfaces according to appended independent claim 1. Preferred features are set out in the dependent claims.

The benefit of such an inclined or angled end stop is to prevent excessive strain of the SMA actuator wire without interfering with the desired actuation movement. It has been appreciated that the most damaging strain in the SMA actuator wire during an impact is in the direction along the SMA actuator wire.

Thus, in cases where an SMA actuator wire is inclined with respect to the optical axis/primary axis, end-stop surfaces extending perpendicular or parallel to the optical axis/primary axis do not offer the best protection. Thus, the present techniques provide improved protection by arranging an end-stop surface that limits movement of the optical element/moveable portion to extend substantially orthogonally to the direction along the shape memory alloy actuator wire.

The present techniques may be applied to an optical assembly or actuator assembly including a single SMA actuator wire. However, particular benefit is achieved by applying the present techniques to an optical assembly/actuator assembly comprising a plurality of SMA actuator wires, for example eight SMA actuator wires. The SMA actuator wires may extend in different directions, whereby movement may be driven with multiple degrees of freedom, for example to provide auto-focus (AF) and optical image stabilisation (OIS) in the case of a lens holder. Although the desired movement is typically parallel and perpendicular to the optical axis/primary axis respectively, the SMA actuator wires may all be inclined with respect to the optical axis/primary axis. It has been found that end-stop surfaces parallel and orthogonal to the optical axis/primary axis limit the desired degree of movement when positioned to prevent excessive SMA actuator wire strain that causes damage to the SMA material of the SMA actuator wires, or conversely do not successfully prevent wire damage when positioned so as not to limit the desired degree of movement. Accordingly, end-stops may be provided in respect of each SMA actuator wire with the end-stop surfaces extending substantially orthogonally to the directions along the respective SMA actuator wires. In this manner, the requirements of preventing the SMA actuator wires from experiencing excessive strain while also not restricting the desired degree of movement may be achieved.

In embodiments, the static portion may comprise at least one key feature, being optionally concave, that interfaces with the optical element/moveable portion, plural end-stop surfaces being formed on each key feature.

Advantageously, the end-stop surface, or each end-stop surface, may be positioned in line with the corresponding SMA actuator wire, thus restricting the strain of the SMA actuator wire regardless of rotation of the optical element/moveable portion.

Where necessary, the end-stop surface, or at least one of the end-stop surfaces, may be positioned not in line with the corresponding SMA actuator wire. In that case, the end-stop surfaces may be arranged to prevent rotation of the optical element/moveable portion.

The end-stop surface, or each end-stop surface, may be formed on the static portion. For example, where the static portion includes a screening can extending around the optical element, the end-stop surface, or at least one of the end-stop surfaces, may be formed on the inner surface of the screening can.

The present techniques may be applied to an optical element that is a lens holder holding at least one lens, or to any other type of optical element, for example a diffractive optical element, a filter, a prism, a mirror, a reflective optical element, a polarising optical element, a dielectric mirror, a metallic mirror, a beam splitter, a grid, a patterned plate, or a grating, which may be a diffraction grating.

In a third approach of the present techniques, there is provided a camera assembly comprising a static portion, a lens holder forming a moving portion wherein the lens holder holds at least one lens, at least one SMA actuator wire connected between the static and moving portions and inclined with respect to the optical axis of the at least one lens, and at least one respective end-stop surface, wherein a primary end-stop surface is substantially orthogonal to the direction of the at least one SMA actuator wire.

Implementations of the present techniques will now be described, by way of example only, with reference to the accompanying drawings, in which:
Figure 1 is a perspective view of a camera lens assembly with a screening can omitted;
Figure 2 is a side view of the camera lens assembly of Figure 1 with the screening can shown cut away in cross-section;
Figure 3 is a cross-sectional view of a camera lens assembly with a modified design;
Figure 4 is a top view of a camera lens assembly with another modified design; and
Figure 5 is the top view of a camera lens assembly of Figure 4 when subjected to an impulse force.

Optical assemblies used in mobile phone cameras today often contain both autofocus (AF) and optical image stabilisation (OIS) mechanisms. Actuation is achieved in a variety of ways, e.g. using voice coil motors (VCM) or shape memory alloy (SMA) actuator wires. Typically, these mechanisms feature a static portion connected to the camera body and a lens holder holding the lens, with the actuator connected between the two portions.

In an optical assembly that is a camera lens assembly where a lens holder forms the moving portion that is driven by SMA actuator wires, the SMA actuator wires are attached between the static portion and the lens element of the camera in a variety of configurations for driving movement of the lens element. Some examples are disclosed in the following documents. WO2007/113478 describes a camera assembly wherein SMA actuator wires that are inclined with respect to the optical axis of the optical element provide an AF function. WO2013/175197 describes a camera assembly wherein four SMA actuator wires are used to achieve OIS, while WO2011/104518 describes a camera assembly wherein eight SMA actuator wires are used to provide movement with more degrees of freedom, for example to provide both AF and OIS. Actuation is achieved by supplying current to the SMA actuator wire causing it to heat up and contract. When current is not supplied to the SMA actuator wire, it cools and can be easily stretched by a resilient biasing element or another contracting SMA actuator wire. By choosing an appropriate configuration of SMA actuator wires, the lens can be positioned with high precision.

SMA actuator wires have a limited region of strain that can be used to generate the desired motion. For this reason, it is important that the full useful strain of the SMA actuator wire is available to produce useful motion. It is also necessary to prevent the SMA actuator wire from being excessively strained, as this may cause fatigue and lasting damage. Excessive strain beyond a safe limit may occur during mechanical impact events such as when a device is dropped by the user. For this reason an end-stop surface may be provided to prevent the SMA actuator wire being strained beyond its safe limit. However, it is also desirable that the optical element does not come into contact with such an end-stop surface when the SMA actuator wire is within the region of useful strain.

Typically, such an end-stop surface extends substantially orthogonally to the direction of movement, for example perpendicular to the optical axis in an optical assembly wherein SMA actuator wires drive movement along the optical axis or parallel to the optical axis in in an optical assembly wherein SMA actuator wires drive movement perpendicular to the optical axis. When actuators are assembled and the tolerances of assembly are considered, there is only a small space between the desired strain of the SMA actuator wire to produce motion and the strain of the SMA actuator wire that will cause the SMA material of the SMA actuator wire to be damaged.

Broadly speaking, embodiments of the present techniques are concerned with improving protection against impact in an actuator assembly wherein a moveable element is driven by SMA actuator wires along a primary axis. In embodiments, the actuator assembly may be an optical assembly where the moveable element is an optical element (e.g. a lens, a mirror, etc.) - in this case, the primary axis is the optical axis of the optical assembly. In embodiments, the actuator assembly may be a camera lens assembly and movement of the camera lens may be driven along a primary axis - in this case, the primary axis is the optical axis of the camera lens.

International Patent Publication No. WO2008/099155 describes how a screening can and a base of an actuator assembly may effectively form end-stops for limiting the ends of the range of movement of a moveable element (i.e. a lens element). The document also describes end-stops arranged to limit the motion of a lens element. Similarly, International Patent Publication No. WO2010/089526 describes how an end-stop formed integrally within a support structure/static component engages with a moveable element (i.e. a lens element) to limit the movement of the lens element in one direction along the optical axis. However, the end-stops in both these documents are merely described as limiting an end of the range of movement of the moveable element and are both non-angled, square end-stops.

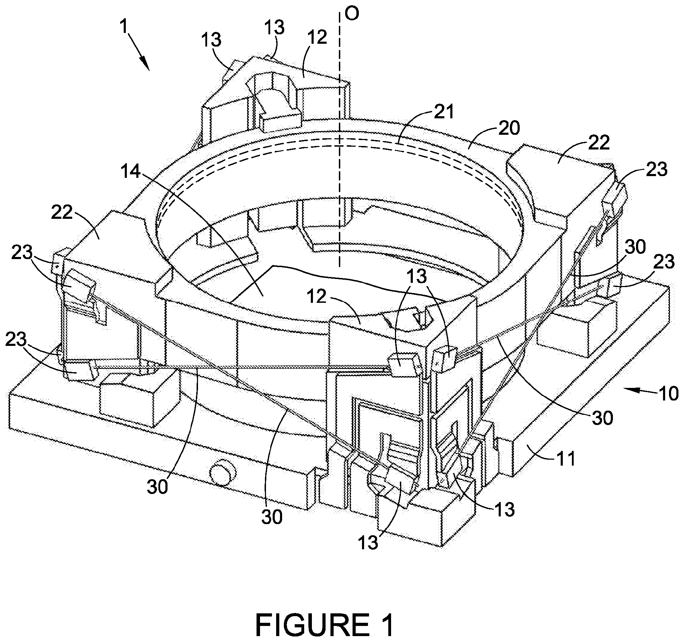

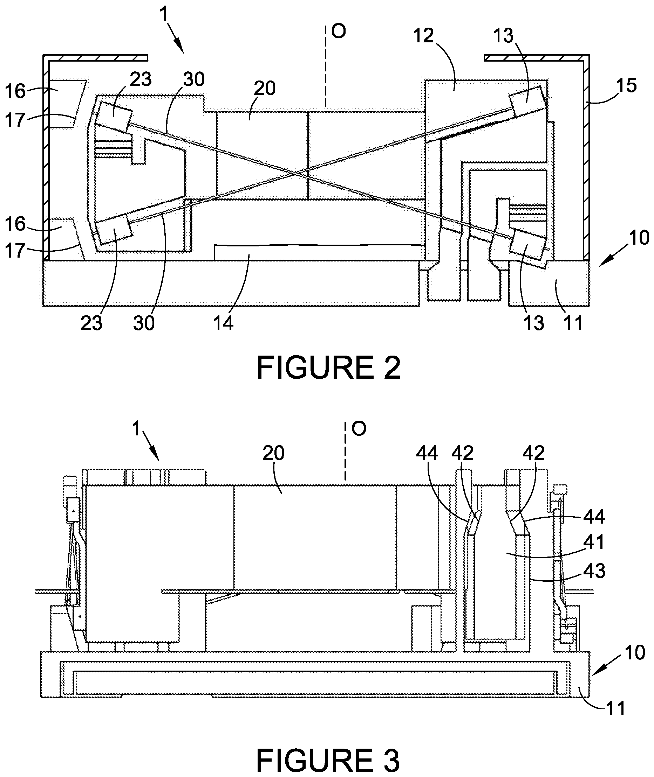

Figures 1 and 2 show a camera lens assembly 1 arranged as follows.

The camera lens assembly 1 comprises a static portion 10 and a lens holder 20 holding a lens 21 (shown in dotted outline), or more generally any number of lenses, having an optical axis O. As described in more detail below, the lens holder 20 is supported on the static portion by eight SMA actuator wires 30, four of which are visible in Figure 1. The lens holder 20 is capable of movement with respect to the static portion 10, driven by the SMA actuator wires 30, with six degrees of freedom, that is three orthogonal translational degrees of freedom and three orthogonal rotational degrees of freedom.

In this example, the lens holder 20 is supported solely by the SMA actuator wires 30, but as an alternative the lens holder 20 could additionally be supported by a suspension system which permits the movement with the six degrees of freedom, for example formed by one or more flexures.

The static portion 10 preferably also includes a screening can 15 (for clarity, not shown in Figure 1 and shown cut away in cross-section in Figure 2) rigidly attached to the base plate 1 and extending around the lens holder 20 with enough clearance to allow full movement of the lens holder 20. Such a screening can 15 protects the camera lens assembly 1 against physical damage and the ingress of dust.

In more detail, the static portion 10 comprises a base plate 11 and two static posts 12 provided on opposite corners of the base plate 11. The static posts 12 which may be affixed to the base plate 11 or formed integrally with the base plate 11 as one piece. Two crimp assemblies 13 are affixed to each of the two static posts 12. The base plate 11 also rigidly mounts an image sensor 14 on which the lens 21 focuses an image.

The lens holder 20 includes two moving posts 22 aligned with the corners of the base plate 11 intermediate the static posts 12. Two crimp assemblies 23 are affixed to each of the moving posts 22.

The SMA actuator wires 30 are connected between the static portion 10 and the lens holder 20 by being crimped at one end to a crimp assembly 13 of the static portion and at the other end to a crimp assembly 23 of the lens holder 20. The crimp assemblies 13 and 23 provide both mechanical and electrical connection. The crimp assemblies 23 on the lens holder 20 at each corner are electrically connected together.

The SMA actuator wires 30 have the same configuration around the lens holder 20 as the SMA actuator wires in the camera apparatus described in WO2011/104518. Specifically, two SMA actuator wires 30 are arranged on each of four sides around the optical axis O, and are inclined with respect to the optical axis (i.e. at an acute angle greater than 0 degrees) in opposite senses to each other and crossing each other, as viewed perpendicular to the optical axis O. Thus, in particular, each of the SMA actuator wires 30 is inclined with respect to the optical axis O of the lens element 20 and with respect to each other. Reference is made to WO2011/104518 for further details of the arrangement of the SMA actuator wires 30.

Selective contraction of the SMA actuator wires 30 drives movement of the lens holder 20 in any of the six degrees of freedom. Contraction and expansion of the SMA actuator wires 30 is generated by application of drive signals thereto. The SMA actuator wires 30 are resistively heated by the drive signals and cool by thermal conduction to the surroundings when the power of the drive signals is reduced.

Thus, the SMA actuator wires 30 may be used to provide both an AF function by translational movement of the lens holder 20 along the optical axis O and an OIS function by translational movement of the lens holder 20 perpendicular to the optical axis O.

The drive signals may be generated in a control circuit (not shown) and supplied to the SMA actuator wires 30. Such a control circuit may receive an input signal representing a desired position for the lens holder 20 and generates drive signals having powers selected to drive the lens holder 20 to the desired position. The power of the drive signals may be either linear or varied using pulse width modulation. The drive signals may be generated using a resistance feedback control technique, in which case the control circuit measures the resistance of the SMA actuator wires 30 and uses the measured resistance as a feedback signal to control the power of the drive signals. Such a resistance feedback control technique may be implemented as disclosed in any of WO2013/175197, WO2014/076463, WO2012/066285, WO2012/020212, WO2011/104518, WO2012/038703, WO2010/089529 or WO2010029316.

As shown in Figure 2 (but omitted from Figure 1 for clarity), the static portion 10 also includes end-stops 16 having end-stop surfaces 17 which face the lens holder 20 and are arranged to limit the movement of the lens holder 20 by contacting it. There is an end-stop 16 corresponding to each SMA actuator wire 30. Figure 2 shows the two SMA actuator wires 30 and the two corresponding end-stops 16 on one side of the camera lens assembly 1, the other SMA actuator wires 30 on the other sides of the camera lens assembly 1 having corresponding end-stops 16 in the same configuration. Each end-stop surface 17 extends orthogonally to the direction along the corresponding SMA actuator wire 30. Thus, the end-stop surfaces 17 are inclined with respect to the optical axis O at a complementary angle to the angle at which the SMA actuator wires are inclined with respect to the optical axis O, the two end-stop surface 17 shown in Figure 2 being inclined in opposite senses to each other.

This arrangement of the end-stop surfaces 17 provides improved protection of the SMA actuator wires 30 from damage caused by impacts. In the worst case for an SMA actuator wire 30 in the event of an impact to the camera lens assembly 1, for example caused by the camera lens assembly 1 being dropped, a high impulse force is applied in the direction along the line of the SMA actuator wire 30 in the direction away from the static portion 1. When the camera lens assembly 1 receives the force, the lens holder 20 will be propelled away from the static portion 1 and contact the end-stop surface 17 which limits that movement and thereby saves the SMA actuator wire 30 from being damaged by receiving too much strain. Due to the position of the end-stop surface 17, the SMA actuator wire 30 may be saved from snapping, or from reaching the point where its useful for life is shortened by strain fatigue. Due to the inclination of the end-stop surfaces 17 to extend orthogonally to the direction along the corresponding SMA actuator wire 30, this is achieved without restricting the degree of movement of the lens holder 20.

In the example shown in Figure 2, each end-stop surface 17 is positioned in line with the corresponding SMA actuator wire 30, that is in line with the crimp assembly 13 at the end of the SMA actuator wire 30. In this arrangement, the strain of the SMA actuator wire 30 is restricted regardless of rotation of the lens holder 20. Where packaging constraints prevent an end-stop surface 17 being positioned in line with the corresponding SMA actuator wire 30, a similar protective effect may be achieved by any one or more of the end-stop surfaces 17 being positioned not in line with the corresponding SMA actuator wire 30. In that case, the optical assembly may be arranged to prevent rotation of the lens holder 20.

In the example shown in Figure 2, the end-stop surfaces 17 are formed on the inner surface of the screening can 15, for example by the end-stops being mounted to the screening can 15, or formed as an integral part of the screening can 15. This is convenient for manufacture. More generally, the end-stop surfaces 17 may be formed on the inner surface of any part of the static portion. For example, any one or more of the end-stops 16 may be mounted to the base plate 11, or formed as an integral part of the base plate 11. Similarly, some end-stop surfaces 17 may be formed on the inner surface of the screening can 15 and others may be formed on the inner surface of an end-stop mounted to the base plate 11, or formed as an integral part of the base plate 11.

There will now be described some modified designs of the camera lens assembly. For brevity, only the modifications will be described and the camera lens assembly otherwise has the construction described above.

Figure 3 shows a camera lens assembly 1 with a modified design in which end-stop surfaces are provided on features formed on opposed corners of the static portion 1 and the lens holder 20 as follows. Figure 3 shows one of the corners, the other corner having the same configuration. In particular, in place of the moving posts 22 described above, the lens holder has moving posts 41 formed on the opposed corners of the lens holder 20, and shaped with tapered sides 42. The moving posts 41 sit inside respective hollows 43 formed in the static posts 12 of the static portion 1. The hollows 42 are each formed with end-stop surfaces 44 having the same configuration as the end-stop surfaces 17 shown in Figure 2 and described above. In particular the end-stop surfaces 44 have the same function as the end-stop surfaces 17 in that they limit the movement of the lens holder 20 by contacting the tapered sides 42 of the moving posts 41.

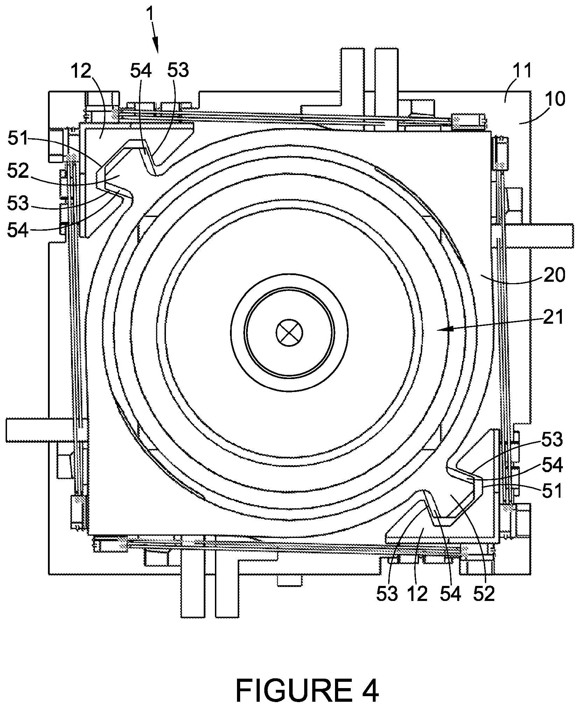

Figure 4 shows a camera lens assembly 1 with another modified design in which end-stop surfaces are formed as follows. The static posts 12 of the static portion 1 are each formed with a concave key features 51 that fit with a respective convex key feature 52 formed on the lens holder 20. The concave key features 51 of the static portion 1 are each formed with plural end-stop surfaces 54 having the same configuration as the end-stop surfaces 17 shown in Figure 2 and described above. In particular the end-stop surfaces 54 have the same function as the end-stop surfaces 17 in that they limit the movement of the lens holder 20 by contacting corresponding surfaces 53 of the convex key features 52 of the lens holder 20.

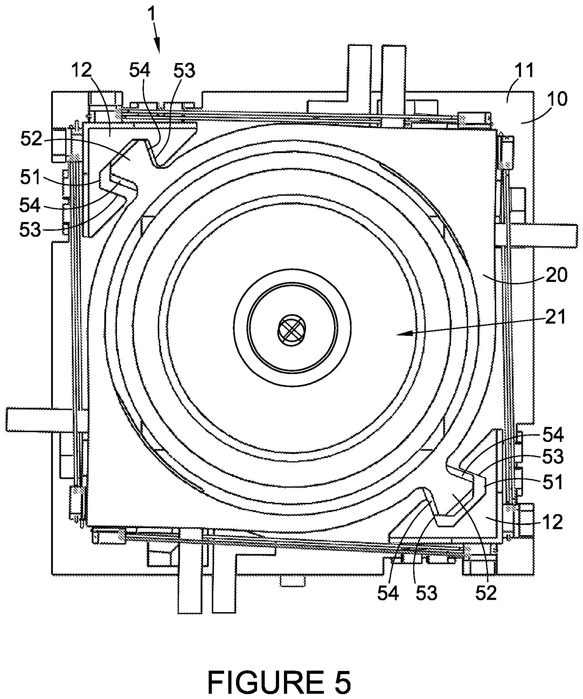

Although the end-stop surfaces 54 extend orthogonally to the SMA actuator wires 30, they are not in line with the corresponding SMA actuator wire 30 as they are formed inside the static posts 12. However, the use of the key features 51 and 52 fitting together on opposite corners of the camera lens assembly 1 prevents rotation of the lens holder 20 when subjected to an impulse force, as shown in Figure 5. Thus, this arrangement of two concave key features 51 fitting with two convex key features 52 gives a compact design to prevent over-strain of the SMA actuator wires 30 while allowing movement of the lens holder 20 in several dimensions.

While a camera lens assembly is described above in which the lens holder is the optical element which is movable, this is merely an example of an optical assembly and may be adapted to a lens assembly not intended for use in a camera, or to other types of optical assembly including other types of movable optical element, for example being of any of the types listed above.

The number of end-stop surfaces that extend substantially orthogonally to the direction along the SMA actuator wire is equal to the number of SMA actuator wires. Other end-stop surfaces may be arranged to constrain movement of the moveable element/portion along the x, y and/or z axis.

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from the scope of protection defined in the appended claims.

## Claims

1. An actuator assembly (1) comprising:
a static portion (10);
a moveable portion (21) capable of movement with respect to the static portion (10) along a primary axis (O) and perpendicular to the primary axis (O);
a plural number of shape memory alloy (SMA) actuator wires (30) connected between the static portion (10) and the moveable portion (21) for driving said movement along the primary axis (O) and perpendicular to the primary axis (O), wherein each SMA actuator wire (30) is inclined with respect to the primary axis (O); and **characterised in that** it further comprises
end-stop surfaces (17, 54) corresponding to each SMA actuator wire (30) arranged to limit said movement and extending substantially orthogonally to the directions along the SMA actuator wires (30).

2. The actuator assembly (1) as claimed in claim 1, wherein the plural number is eight.

3. The actuator assembly (1) as claimed in claim 1 or 2, wherein the static portion (10) comprises at least one key feature (51) that fits with a corresponding key feature (52) formed on the moveable portion (21), plural end-stop surfaces (17, 54) being formed on the or each key feature (51) of the static portion (10).

4. The actuator assembly (1) as claimed in claim 3, wherein the key feature (51) of the static portion (10) is concave.

5. The actuator assembly (1) as claimed in claim 1 or 2, wherein each end-stop surface (17, 54) is formed on the static portion (10).

6. The actuator assembly as claimed in any preceding claim, wherein each end-stop surface (17, 54) is positioned in line with the corresponding SMA actuator wire (30).

7. The actuator assembly (1) as claimed in any one of claims 1 to 5, wherein at least one of the end-stop surfaces (17, 54) is positioned not in line with the corresponding SMA actuator wire (30), the end-stop surfaces (17, 54) being arranged to prevent rotation of the moveable portion (21).

8. An optical assembly (1) comprising the actuator assembly (1) as claimed in any preceding claim, wherein the moveable portion (21) corresponds to an optical element (21) having an optical axis (O), and the primary axis (O) corresponds to the optical axis (O).

9. The optical assembly (1) as claimed in claim 8, wherein the static portion (10) includes a screening can (15) extending around the optical element (21).

10. The optical assembly (1) as claimed in claim 9, wherein the end-stop surface (17,54), or at least one of the end-stop surfaces (17, 54), is formed on the inner surface of the screening can (15).

11. The optical assembly (1) as claimed in any one of claims 8 to 10, wherein the optical element (21) is a lens holder (20) holding at least one lens (21).

12. A camera assembly comprising the optical assembly (1) of claim 8. actuator wire.

## Patentansprüche

1. Aktoranordnung (1), umfassend:
einen statischen Abschnitt (10);
einen beweglichen Abschnitt (21), der zu Bewegung in Bezug auf den statischen Abschnitt (10) entlang einer gedachten Primärachse (O) und senkrecht zu der Primärachse (O) fähig ist;
eine Mehrzahl von Formgedächtnislegierung (SMA) -Aktordrähten (30), die zwischen dem statischen Abschnitt (10) und dem beweglichen Abschnitt (21) verbunden sind, zum Antreiben der Bewegung entlang der Primärachse (O) und senkrecht zu der Primärachse (O), wobei jeder SMA-Aktordraht (30) in Bezug auf die Primärachse (O) geneigt ist; und
Endanschlagflächen (17, 54), die jedem SMA-Aktordraht (30) entsprechen, die angeordnet sind, um die Bewegung einzuschränken und sich im Wesentlichen orthogonal zu den Richtungen entlang der SMA-Aktordrähte (30) zu erstrecken.

2. Aktoranordnung (1) nach Anspruch 1, wobei die Mehrzahl acht ist.

3. Aktoranordnung (1) nach Anspruch 1 oder 2, wobei der statische Abschnitt (10) mindestens ein Schlüsselmerkmal (51) umfasst, das mit einem entsprechenden Schlüsselmerkmal (52) zusammenpasst, das an dem beweglichen Abschnitt (21) gebildet ist, wobei mehrere Endanschlagflächen (17, 54) an dem oder jedem Schlüsselmerkmal (51) des statischen Abschnitts (10) gebildet sind.

4. Aktoranordnung (1) nach Anspruch 3, wobei das Schlüsselmerkmal (51) des statischen Abschnitts (10) konkav ist.

5. Aktoranordnung (1) nach Anspruch 1 oder 2, wobei jede Endanschlagfläche (17, 54) an dem statischen Abschnitt (10) gebildet ist.

6. Aktoranordnung nach einem vorhergehenden Anspruch, wobei jede Endanschlagfläche (17, 54) in Übereinstimmung mit dem entsprechenden SMA-Aktordraht (30) positioniert ist.

7. Aktoranordnung (1) nach einem der Ansprüche 1 bis 5, wobei mindestens eine der Endanschlagflächen (17, 54) nicht in Übereinstimmung mit dem entsprechenden SMA-Aktordraht (30) positioniert ist, wobei die Endanschlagflächen (17, 54) angeordnet sind, um Drehung des beweglichen Abschnitts (21) zu verhindern.

8. Optische Anordnung (1), umfassend die Aktoranordnung (1) nach einem vorhergehenden Anspruch, wobei der bewegliche Abschnitt (21) einem optischen Element (21) mit einer optischen Achse (O) entspricht, und die Primärachse (O) der optischen Achse (O) entspricht.

9. Optische Anordnung (1) nach Anspruch 8, wobei der statische Abschnitt (10) einen Abschirmbecher (15) beinhaltet, der sich um das optische Element (21) erstreckt.

10. Optische Anordnung (1) nach Anspruch 9, wobei die Endanschlagfläche (17, 54) oder mindestens eine der Endanschlagflächen (17, 54) an der Innenfläche des Abschirmbechers (15) gebildet ist.

11. Optische Anordnung (1) nach einem der Ansprüche 8 bis 10, wobei das optische Element (21) ein Linsenhalter (20) ist, der mindestens eine Linse (21) hält.

12. Kameraanordnung, umfassend die optische Anordnung (1) nach Anspruch 8.

## Revendications

1. Ensemble d'actionneur (1) comprenant :
une partie statique (10) ;
une partie mobile (21) capable de se déplacer par rapport à la partie statique (10) le long d'un axe primaire théorique (O) et perpendiculaire à l'axe primaire (O) ;
un nombre multiple de fils d'actionneur (30) en alliage à mémoire de forme (SMA) connectés entre la partie statique (10) et la partie mobile (21) pour entraîner ledit mouvement le long de l'axe primaire (O) et perpendiculairement à l'axe primaire (O), dans lequel chaque fil d'actionneur SMA (30) est incliné par rapport à l'axe primaire (O) ; et
des surfaces de butée (17, 54) correspondant à chaque fil d'actionneur SMA (30) agencées pour limiter ledit mouvement et s'étendant sensiblement orthogonalement aux directions le long des fils d'actionneur SMA (30).

2. Ensemble d'actionneur (1) selon la revendication 1, dans lequel le nombre multiple est huit.

3. Ensemble d'actionneur (1) selon la revendication 1 ou 2, dans lequel la partie statique (10) comprend au moins un élément clé (51) qui s'adapte à un élément clé correspondant (52) formé sur la partie mobile (21), plusieurs surfaces de butée (17, 54) étant formées sur le ou chaque élément clé (51) de la partie statique (10).

4. Ensemble d'actionneur (1) selon la revendication 3, dans lequel l'élément clé (51) de la partie statique (10) est concave.

5. Ensemble actionneur (1) selon la revendication 1 ou 2, dans lequel chaque surface de butée (17, 54) est formée sur la partie statique (10).

6. Ensemble d'actionneur selon l'une quelconque des revendications précédentes, dans lequel chaque surface de butée (17, 54) est positionnée en ligne avec le fil d'actionneur SMA correspondant (30).

7. Ensemble d'actionneur (1) selon l'une quelconque des revendications 1 à 5, dans lequel au moins une des surfaces de butée (17, 54) n'est pas positionnée dans l'alignement du fil d'actionneur SMA correspondant (30), les surfaces de butée (17, 54) sont disposées pour empêcher la rotation de la partie mobile (21).

8. Ensemble optique (1) comprenant l'ensemble d'actionneur (1) selon l'une quelconque des revendications précédentes, dans lequel la partie mobile (21) correspond à un élément optique (21) ayant un axe optique (O), et l'axe primaire (O) correspond à l'axe optique (O).

9. Ensemble optique (1) selon la revendication 8, dans lequel la partie statique (10) comprend un boîtier d'écran (15) s'étendant autour de l'élément optique (21).

10. Ensemble optique (1) selon la revendication 9, dans lequel la surface de butée (17, 54), ou au moins l'une des surfaces de butée (17, 54), est formée sur la surface interne du boîtier d'écran (15).

11. Ensemble optique (1) selon l'une quelconque des revendications 8 à 10, dans lequel l'élément optique (21) est un porte-lentille (20) maintenant au moins une lentille (21).

12. Ensemble de caméra comprenant l'ensemble optique (1) selon la revendication 8.
